# FASCICULE DE BREVET EUROPEEN

(11) **EP 1 747 840 B1**
(45) Date de publication et mention de la délivrance du brevet: **26.03.2008**
(21) Numéro de dépôt: 06118139.2
(22) Date de dépôt: 28.07.2006
(51) Int. Cl.: B23P 6/00, F01D 5/00, B23P 15/00, G01N 3/00

(54) **Procédé de réparation d'une aube d'un disque aubagé monobloc de turbomachine et éprouvette pour la mise en oeuvre du procédé**
Verfahren zum Reparieren einer Schaufel einer integral beschaufelten Turbinenrotorscheibe und Prüfkörper zur Durchführung des Verfahrens
Method of repairing a blade of an integrally bladed turbine rotor disc and test-piece for carrying out the method

(30) Priorité: 29.07.2005 FR 0508151
(43) Date de publication de la demande: 31.01.2007
(73) Titulaire: SNECMA, 75015 Paris (FR); SNECMA SERVICES, 75015 Paris (FR)
(72) Inventeur: BOUET, Bernard, 77220, GRETZ ARMAINVILLIERS (FR); KERNEIS, Stéphane, 78140, VELIZY (FR); PAGNON, Claude, André, Charles, 17640, VAUX SUR MER (FR); PINTO, Eric, Christian, Jean, 77930, FLEURY EN BIERE (FR)
(74) Mandataire: David, Daniel

(56) Documents cités:
- US-A- 4 409 462
- US-A- 4 730 093
- US-A- 5 795 412
- US-B1- 6 238 187
- US-B1- 6 568 077

## Description

L'invention concerne un procédé de réparation d'une aube de rotor monobloc d'une turbomachine selon le préambule de la revendication 1, et un élément d'éprouvette de début ou fin de campagne, ou de mise au point, pour la mise en oeuvre du procédé.

Le document US-B1-6,568,077 décrit un tel procédé.

Un turboréacteur comporte différents rotors, qui tournent autour de son axe. Ces rotors peuvent comporter un disque, avec une jante le long de laquelle sont fixées des aubes. Conventionnellement, les aubes sont retenues par leur pied dans un logement prévu à cet effet. Afin de répondre aux exigences accrues en performances des moteurs, ces rotors peuvent maintenant être monoblocs. On parle de disques aubagés monoblocs (DAM). Dans un DAM, les aubes et le disque ne forment qu'une seule pièce. A cet effet, une ébauche forgée est usinée de façon à former le disque, les aubes s'étendant radialement à sa circonférence, le tout étant monobloc. Il est également possible de souder certaines pièces, le DAM résultant étant monobloc. Les avantages des rotors monoblocs sont nombreux, notamment en terme de masse.

En raison de l'absorption par le moteur de corps étrangers, de l'érosion liée à la poussière ou de particules entraînées par le flux de la veine de gaz, les aubes peuvent présenter des zones abîmées, sous forme d'usure ou de portions arrachées, qui nuisent à l'efficacité du turboréacteur. Les zones concernées sont généralement le sommet, les coins d'aube du côté du bord d'attaque ou de fuite, le bord d'attaque ou le bord de fuite. La réparation des aubes dans un DAM n'est pas aisée, car il n'est pas possible de les démonter pour les réparer.

Les usures ou dommages, s'ils ne peuvent pas être réparés, entraînent le remplacement de la pièce incriminée. Or, dans le cas d'un DAM, le remplacement d'une aube se traduit par le remplacement de l'ensemble du DAM.

On connaît un procédé de réparation des aubes, par le document US 6, 238, 187. Dans ce procédé, on découpe une portion de l'aube autour de la zone abîmée, portion standardisée afin de permettre la reproductibilité du procédé quelle que soit la forme et la taille de la zone abîmée, tant qu'elle se situe dans la portion en question. Une pièce de remplacement, ou empiècement, communément désigné par son équivalent anglais "patch", est alors soudée à l'aube. Cet empiècement est de dimensions supérieures à celles de la portion de l'aube enlevée et est ensuite usiné de façon à retrouver la forme initiale de l'aube.

Le document US 6, 568, 077 enseigne l'utilisation, pour l'étape de soudage d'un empiècement du procédé ci-dessus, d'un procédé de soudage par faisceau d'électrons, présentant les avantages d'une vitesse de soudage élevée et de sa faculté à pouvoir souder des épaisseurs importantes.

Un problème se pose toutefois pour les rotors en alliage de titane dit Ti17. Cet alliage est rapporté par exemple dans la demande de brevet EP 1, 340, 832 de la Demanderesse portant sur un produit, tel qu'une aube, réalisé en cette matière. Ce matériau est difficilement soudable car, lors de sa fusion, se produit un dégazage donnant naissance à des microporosités ou soufflures dans la zone affectée thermiquement (ZAT) par le soudage, qui entraînent un abattement des caractéristiques mécaniques de la pièce soudée. Cet abattement peut aller jusqu'à 80% en tenue mécanique. Un tel abattement n'est pas tolérable dans les applications aéronautiques et se produit en cas de soudage par faisceau d'électrons. Par ailleurs, pour un rotor en Ti17, les techniques de type TIG ou de type à micro-plasma utilisées traditionnellement et couramment dans l'industrie aéronautique ne permettent pas d'obtenir des résultats acceptables.

De surcroît, les aubes récentes présentent des formes complexes en trois dimensions, l'épaisseur de leurs parois étant variable, et ne permettent pas l'utilisation aisée d'un procédé de soudage par électrons, qui requiert une définition de paramètres très précis. Ces paramètres doivent être définis pour chaque cas d'espèce considéré, toute standardisation étant délicate à mettre en oeuvre.

L'invention vise à proposer un procédé de réparation d'une aube d'un rotor monobloc, dont la forme est évolutive et l'épaisseur variable, procédé comportant une étape de soudage par faisceau d'électrons.

L'invention concerne un procédé de réparation d'une aube d'un disque aubagé monobloc de turbomachine comportant au moins une zone endommagée, par soudage par faisceau d'électrons d'un empiècement au moyen d'une machine de soudage par faisceau d'électrons, comprenant les étapes de préparation de la zone endommagée, de soudage par faisceau d'électrons de l'empiècement et de reprise par usinage de la zone réparée, caractérisé par le fait que :
- l'étape de préparation comprend l'usinage de la zone endommagée de manière à obtenir une zone à réparer de profil déterminé ;
- on procède au soudage, sur un premier élément d'éprouvette, correspondant à l'aube, présentant ledit profil déterminé, avec la machine de soudage, dont les paramètres de fonctionnement sont préétablis, d'un deuxième élément d'éprouvette, correspondant à l'empiècement, présentant les caractéristiques de l'empiècement, pour obtenir une éprouvette dite de début de campagne ;
- on vérifie la qualité de l'éprouvette de début de campagne après soudage, et, dans l'hypothèse où la qualité de l'éprouvette correspond aux critères de réception de la réparation,
- on soude l'empiècement sur la zone à réparer avec la même machine de soudage par faisceau d'électrons sans en changer les paramètres de fonctionnement et
- on reprend par usinage la zone réparée.

La présente invention présente l'avantage de permettre l'industrialisation de la réparation des disques aubagés monoblocs en se fondant sur la capacité de pilotage des machines de soudage par faisceau d'électrons. Une fois que la machine est validée et les paramètres établis, il suffit de vérifier par le soudage préalable du deuxième élément d'éprouvette, correspondant à l'empiècement, sur le premier élément d'éprouvette, présentant le profil de l'aube, que les paramètres sont corrects et n'ont pas dérivé. On a constaté avec surprise que cette méthode permettait avec une grande fiabilité de réparer des pièces aussi complexes que les DAM. Le contrôle préalable suffit pour autoriser la réparation d'une pluralité d'aubes sur le même disque.

Conformément à une autre caractéristique, et pour s'assurer de manière complémentaire que l'opération s'est bien déroulée, le procédé comprend, après soudage de l'empiècement sur l'aube ou des empiècements sur les aubes à réparer successives, une étape de soudage, sur un premier élément d'éprouvette, correspondant à l'aube, présentant le profil déterminé de l'aube, d'un deuxième élément d'éprouvette, correspondant à l'empiècement, présentant les caractéristiques de l'empiècement, avec la même machine de soudage par faisceau d'électrons sans en changer les paramètres de fonctionnement, pour obtenir une éprouvette dite de fin de campagne, et de vérification de la qualité de l'éprouvette de fin de campagne.

Cette étape présente l'intérêt de donner un état du déroulement du procédé de soudage en fin de campagne, lorsque les paramètres des installations peuvent avoir légèrement dérivé. Si l'éprouvette de fin de campagne est de qualité acceptable, alors on en conclut que l'ensemble des réparations qui ont eu lieu entre le soudage de l'éprouvette de début de campagne et le soudage de l'éprouvette de fin de campagne s'est correctement déroulé. Cela permet, d'une part de simplifier les procédés de réparation, d'autre part de faire l'économie de contrôles directs de qualité sur le DAM qui, en raison de l'encombrement de ce dernier, sont malaisés voire impossibles.

Le procédé convient particulièrement bien lorsque le métal constituant le disque est un alliage de titane, notamment le Ti17, mais la demanderesse n'entend pas limiter la portée de ses droits à cette seule application.

Le procédé s'applique à au moins une zone à réparer parmi les sommets de pale, les coins de bord d'attaque ou de bord de fuite, et les bords d'attaque ou de fuite.

Conformément à une autre caractéristique, le procédé de réparation de disque aubagé monobloc comprend une étape de mise au point de la machine de soudage par faisceau d'électrons au cours de laquelle les paramètres sont préétablis par le soudage sur un premier élément d'éprouvette, correspondant à l'aube, présentant le profil déterminé de l'aube, d'un second élément d'éprouvette; correspondant à l'empiècement, présentant les caractéristiques de l'empiècement, pour obtenir une éprouvette dite de mise au point, suivi de contrôles non destructifs et/ou destructifs de l'éprouvette de mise au point.

De préférence, les premiers éléments, ainsi que les deuxièmes éléments, de l'éprouvette de début de campagne, de l'éprouvette de fin de campagne et de l'éprouvette de mise au point, sont identiques.

Conformément à une autre caractéristique, le procédé de réparation comprend également une étape de validation du couple matériau-machine, au cours de laquelle on soude deux plaques du matériau de l'aube, d'épaisseur au moins égale à l'épaisseur maximale du profil déterminé de l'aube, pour obtenir une éprouvette de validation en tenue mécanique, et on procède au moins à des essais de fatigue cycliques sur l'éprouvette de validation en tenue mécanique.

L'invention porte aussi sur un élément d'éprouvette de début ou fin de campagne, ou de mise au point, pour la mise en oeuvre du procédé.

L'invention sera mieux comprise à l'aide de la description suivante de la forme de réalisation préférée du procédé de l'invention, en référence aux planches annexées, sur lesquelles :
- la figure 1 représente une vue partielle en perspective d'un disque aubagé monobloc dont une aube peut être réparée grâce au procédé de l'invention ;
- la figure 2 représente une vue en perspective schématique d'une aube du disque de la figure 1, sur laquelle a été représentée en grisé la portion d'aube enlevée lors de la phase de préparation du procédé de l'invention ;
- la figure 3 représente une vue en perspective schématique d'un empiècement avec des talons pour la mise en oeuvre du procédé de l'invention ;
- la figure 4 représente une vue en perspective schématique du premier élément d'éprouvette de l'éprouvette de début ou de fin de campagne, ou de mise au point, pour la mise en oeuvre du procédé de l'invention, correspondant à une aube ;
- la figure 5 représente une vue en perspective schématique du deuxième élément d'éprouvette de l'éprouvette de début ou de fin de campagne, ou de mise au point, pour la mise en oeuvre du procédé de l'invention, correspondant à un empiècement ;
- la figure 6 représente une vue en perspective schématique d'une éprouvette de validation en tenue mécanique soudée, utilisée pour la validation d'un couple machine-matériau pour la mise en oeuvre du procédé de l'invention et
- la figure 7 représente une vue en perspective schématique de l'éprouvette de la figure 6, découpée pour des essais de fatigue cyclique.

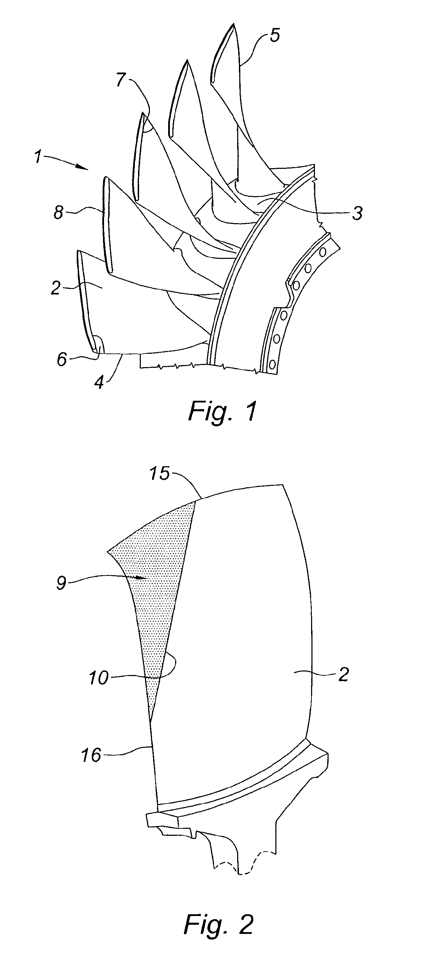

En référence à la figure 1, le procédé de l'invention concerne la réparation d'une aube 2, s'étendant radialement à la périphérie d'une jante 3 d'un disque aubagé monobloc 1 (DAM 1), ici en titane dit Ti17. En raison d'un impact ou d'une usure, cette aube présente une zone abîmée. Les zones susceptibles d'être endommagées sont les bords d'attaque 4, les bords de fuite 5, les coins de bords d'attaque 6, les coins de bords de fuite 7 ainsi que la ligne du sommet de l'aube 8, ici pourvu d'une portion amincie formant léchette d'étanchéité de manière connue.

On a préalablement défini sur l'aube des portions standardisées dans lesquelles peuvent se situer les zones abîmées susceptibles d'être réparées, ces portions correspondant à des portions d'aubes qui seront découpées pour être remplacées. Une première étape du procédé consiste à contrôler si la zone abîmée de l'aube se situe dans une telle portion. On voit sur la figure 2 une aube 2 ainsi qu'une telle portion standardisée 9, représentée en grisé. Cette portion 9 comporte ici le coin du bord d'attaque de l'aube 2.

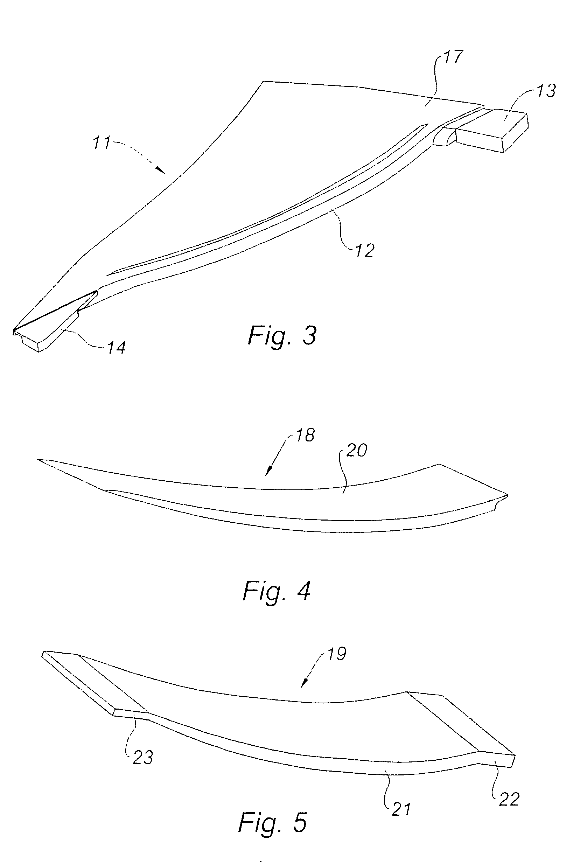

Si tel est le cas, la portion standardisée est découpée par usinage. Les paramètres de cet usinage sont préalablement figés et identiques pour les aubes d'un même type. La ligne de découpe 10 de la portion standardisée 9 est définie de manière, d'une part, à évoluer le plus lentement possible pour ne pas présenter de points d'inflexion trop brusque ou de coins, afin de faciliter la découpe et le soudage subséquent, d'autre part, à s'étendre dans une région de l'aube où les contraintes en fonctionnement sont minimales, du moins non maximales, afin que la zone qui sera soudée ne soit pas par la suite soumise, le long de la ligne de soudure, à de trop fortes contraintes. Les dimensions maximales de la portion découpée sont définies en fonction de l'utilisation du moteur et compte tenu des charges aérodynamiques que subit l'aube 2. Ainsi, tous les défauts d'une aube 2 contenus dans une telle portion 9, quelle que soit leur forme ou leur nature, peuvent être réparés par découpe de cette portion 9 et remplacement de cette dernière avec un empiècement standardisé 11, que l'on voit sur la figure 3, qui sera décrit plus loin. La découpe est par ailleurs effectuée de manière à garantir un état de surface compatible avec la qualité de soudage recherchée.

On obtient ainsi sur l'aube 2 une ligne de découpe présentant un profil déterminé.

Une fois cette découpe par usinage effectuée, une étape de nettoyage de l'aube 2 et surtout de sa ligne de découpe 10 est opérée, afin de la préparer à l'étape de soudage.

Avant le soudage d'un empiècement 11 sur l'aube découpée, on effectue le soudage d'une éprouvette de début de campagne, dont on voit le premier élément et le deuxième élément sur les figures 4 et 5, qui sera détaillé plus loin.

L'empiècement 11, ou patch, est alors mis en contact avec la ligne de découpe 10 de l'aube 2. Cette mise en contact se fait grâce à un dispositif de maintien de l'aube 2 et de l'empiècement 11, non décrit ici. Ce dispositif doit être agencé de façon à permettre un positionnement très précis de ces éléments l'un par rapport à l'autre et est adaptée à chaque aube 2. De préférence, le même dispositif a été utilisé pour le maintien de l'aube 2 lors de la découpe de sa portion standardisée 9, ce qui permet de conserver les mêmes paramètres et d'avoir un plan de soudage identique au plan de découpe.

L'empiècement 11, qui est dans le même matériau que l'aube, ici en titane Ti17, présente un profil sur une ligne de découpe 12 qui reprend exactement le profil déterminé de la ligne de découpe de l'aube 2 et présente une surépaisseur par rapport à l'épaisseur de l'aube, ici sensiblement égale à 1 mm, environ répartis pour 0,5 mm d'un côté de l'aube et 0,5 mm de l'autre côté, pour une aube dont l'épaisseur varie entre 0,5 et 6 mm, de préférence entre 0,7 et 3,45 mm. L'épaisseur de l'empiècement 11 suit ainsi, sur sa ligne de découpe 12 mais aussi sur l'ensemble de sa surface, les évolutions du profil et de l'épaisseur variable de l'aube, le long de sa ligne 10 de découpe et sur la surface correspondant à la portion qui a été enlevée, avec une surépaisseur. Autrement dit, la forme de l'empiècement 11 en surface correspond globalement à celle de la portion 9 de l'aube 2 qui a été découpée, ses dimensions étant légèrement plus grandes.

Dans le prolongement de chaque extrémité de sa ligne de découpe 12, l'empiècement 11 comporte un talon 13, 14, en saillie par rapport à la surface de la ligne de découpe 12 et s'étendant de façon à ne pas interférer avec l'aube 2 une fois l'empiècement 11 mis en contact avec elle. Plus précisément, chaque talon 13, 14 épouse la forme de l'arête 15, 16 de l'aube 2 s'étendant à partir de sa ligne de découpe 10, en l'espèce les arêtes correspondant à sa ligne de sommet 15 et son bord d'attaque 16, qui formaient le coin du bord d'attaque de l'aube 2. Ces talons 13, 14 permettent d'initialiser et de terminer le soudage, comme on le verra plus loin. Les talons 13, 14 peuvent être formés d'une seule pièce avec l'empiècement 11 ou rapportés sur lui. Dans le cas où ils sont d'une seule pièce avec lui, ils permettent également à un opérateur de tenir et déplacer l'empiècement 11. Des talons pourraient également être rapportés sur l'aube 2.

La ligne de découpe 12 de l'empiècement 11 est donc mise en contact avec la ligne de découpe 10 de l'aube 2, cette mise en contact devant être faite de façon très précise, grâce au dispositif de maintien cité plus haut, dans la mesure où le profil de l'empiècement 11 suit exactement le profil de l'aube 2, ce qui n'était pas le cas dans l'art antérieur où les empiècements étaient d'épaisseur constante nettement supérieure à l'épaisseur maximale de l'aube. Grâce à cette épaisseur évolutive de l'empiècement 11, on évite des différences ainsi que des variations d'épaisseur trop importantes entre l'aube 2 et l'empiècement 11, ce qui simplifie le procédé de soudage par faisceau d'électrons subséquent et en garantit une meilleure qualité, procédé qui requiert justement une grande précision d'exécution. Cela permet de limiter les causes à l'origine de défauts de soudage. Le dispositif de maintien maintenant l'aube 2, l'empiècement 11 et éventuellement les talons 13, 14, s'ils ne sont pas solidaires de l'empiècement 11, doit donc pouvoir permettre ce positionnement en trois dimensions.

Le soudage par faisceau d'électrons a alors lieu au moyen d'une machine de soudage par faisceaux d'électrons. A cet effet, l'ensemble de l'aube 2 et de l'empiècement 11 est placé dans une atmosphère neutre, typiquement dans le vide, un canon à électrons de la machine projetant un faisceau d'électrons sur le cordon de soudure, situé à l'interface entre les lignes de découpe 10, 12 de l'aube 2 et de l'empiècement 11, l'énergie cinétique des électrons échauffant les pièces et permettant leur soudage. Les différents paramètres de cette étape de soudage, notamment la puissance du faisceau (typiquement entre 50 à 200 kW), la vitesse des électrons, réglée grâce à des tensions d'accélération, la densité d'électrons, le courant de focalisation permettant de régler la profondeur du point de focalisation, l'amplitude, la forme et la fréquence de la vibration du faisceau d'électrons autour de son axe et la vitesse de déplacement du faisceau ont été préalablement définis grâce des essais sur des éprouvettes de mise au point semblables à l'éprouvette de début de campagne, qui seront étudiées plus loin.

Les avantages de l'utilisation d'un soudage par faisceau d'électrons sont notamment la vitesse de soudage et la qualité de la soudure obtenue le long d'un cordon de soudure relativement fin.

Le soudage est initié sur un talon 13. En effet, dans le soudage par faisceau d'électrons, le début du soudage génère des défauts dans la pièce, ainsi qu'un trou. Ces inconvénients n'affectent pas l'aube 2 dans la mesure où ils sont circonscrits dans le talon 13. Par ailleurs, l'initialisation sur le talon 13 permet, lorsque le faisceau d'électrons atteint le plan de joint entre l'aube 2 et l'empiècement 11, que le canon d'électrons soit à pleine puissance, puissance qu'il conserve jusqu'à la fin de la ligne de découpe 10 de l'aube 2. L'ensemble du soudage de l'empiècement 11 à l'aube 2 se fait donc, pour ce qui concerne la ligne de découpe 10 de l'aube 2, en "régime permanent" du canon à électron. On peut noter que dans le cas d'espèce considéré, le cordon de soudure est du type débouchant. Le soudage se poursuit et se termine sur le talon opposé 14, de façon à ce que les défauts et trou également engendrés dans cette phase soient circonscrits dans ce talon 14.

Le faisceau d'électrons n'est pas dirigé exactement sur le plan de joint mais légèrement décalé du côté de l'empiècement 11. En effet, autour d'un cordon de soudure peut apparaître un "caniveau", c'est-à-dire une zone dont l'épaisseur est réduite par rapport à son épaisseur initiale, du fait de la fuite de matière vers le cordon de soudure. L'empiècement 11 présentant une épaisseur supérieure à celle de l'aube 2, la matière a tendance à contourner le cordon de soudure pour venir combler le caniveau du côté de l'aube 2. Le caniveau qui pourrait se former du côté de l'empiècement 11 disparaîtrait dans l'étape d'usinage qui va suivre. Le décalage du faisceau du côté de l'empiècement 11 permet donc d'éviter la présence d'un caniveau dans l'aube 2 réparée.

Les paramètres de la machine de soudage par faisceau d'électrons sont de préférence affinés grâce à des moyens permettant l'asservissement de ces paramètres à la géométrie du cordon de soudure, donc à la géométrie de la ligne de découpe 10 de l'aube 2, de façon évolutive, en temps réel, le long de cette ligne de découpe 10. Le cordon de soudure obtenu est ainsi de meilleure qualité.

Il convient de noter un autre avantage de l'utilisation de talons 13, 14. L'aube 2 comporte, le long de sa ligne de sommet 15, une léchette d'étanchéité, à laquelle correspond une léchette 17 sur l'empiècement 11. Du fait de sa très faible épaisseur, une telle léchette ne peut pas être directement soudée par faisceau d'électrons, car cette zone s'effondrerait lors du soudage. Il était donc fréquent, dans l'art antérieur, de ne pas souder la léchette mais d'en former une par la suite par un procédé de rechargement, par laser par exemple, ce qui engendrait un surcoût notable. Le talon 13, placé sous la léchette, du côté de l'aube 2 et de l'empiècement 11 où la suite du profil est plus large, forme une surépaisseur au niveau de la léchette. Ainsi, la zone de soudage des portions de léchettes entre elles n'est pas trop fine et ces portions peuvent être soudée par soudage par faisceau d'électrons, pour assurer la continuité de la léchette de l'aube 2 une fois réparée.

Une fois l'opération de soudage par faisceau d'électrons effectuée, l'aube 2, avec l'empiècement 11 soudé, est soumise à un traitement thermique afin d'abaisser les tensions générées lors du soudage. Un grenaillage à ultrasons peut également être mis en oeuvre. On procède à certains contrôles, effectués afin de s'assurer de la qualité du soudage. Ces contrôles peuvent se résumer à des contrôles visuels de vérifications que le soudage a bien eu lieu et qu'il n'a pas a priori produit d'imperfections notables, en raison des garanties offertes par le soudage d'une éprouvette de début de campagne. On peut à cet effet chercher à détecter visuellement les traces d'oxydation qui seraient dues à une mauvaise protection par le gaz de confinement, les manques de liaison, les criques (au microscope binoculaire) et les infondus.

Si le résultat est, selon ce ou ces contrôles sommaires, satisfaisant, l'empiècement 11 est ensuite usiné de façon à enlever le surplus de matière pour retrouver une forme quasi définitive correspondant pratiquement à la forme de l'aube 2 complète. Plusieurs passes de cet outillage d'usinage ont mises en oeuvre, peu de matière étant enlevée à chaque fois, jusqu'à l'obtention d'une aube dont les cotes sont légèrement supérieures aux cotes finales, c'est-à-dire aux cotes correspondant aux cotes de l'aube initiale. Il s'agit des cotes de la portion 9 qui a été découpée et remplacée par l'empiècement 11, le reste de l'aube 2 n'étant pas usiné puisqu'il doit rester identique au reste de l'aube 2 initiale.

La réparation de l'aube 2 est affinée et terminée par polissage manuel, afin d'obtenir une aube 2 identique à l'aube 2 initiale.

Le procédé de l'invention est notamment caractérisé par le fait qu'avant de procéder au soudage de l'empiècement à l'aube 2, on procède au soudage d'une éprouvette dite de début de campagne. A cet effet, on soude ensemble deux éléments d'éprouvette, un premier élément 18, représentée sur la figure 4, correspondant à l'aube 2, et un deuxième élément 19, représentée sur la figure 5, correspondant à l'empiècement 11. On désignera le premier élément d'éprouvette 18, correspondant à l'aube 2, par le terme premier élément 18, le deuxième élément d'éprouvette 19, correspondant à l'empiècement 11, par le terme deuxième élément 19. Le terme d'éprouvette correspondra à l'éprouvette une fois soudée, c'est-à-dire les deux éléments 18, 19 soudés.

Le premier élément 18 présente une ligne de découpe 20 dont le profil est identique au profil déterminé de la ligne de découpe 10 de l'aube 2. Il est constitué du même matériau, ici du titane Ti17, qui a subi les mêmes procédés de traitement que l'aube 2, depuis son élaboration jusqu'à sa mise en service, et présente les mêmes caractéristiques de surface, les mêmes propriétés métallurgiques et a été usiné de la même manière. De préférence, il peut s'agir d'une portion issue de l'ébauche forgée de DAM, ce qui assure la similarité des caractéristiques. Il comporte des portions correspondant aux talons 13, 14, mêmes si ces dernières n'ont pas été représentées.

De la même manière, le deuxième élément 19 présente une ligne de découpe 21 dont le profil est identique à celui de la ligne de découpe 12 de l'empiècement 11, et des caractéristiques similaires de la même façon que précédemment. Il comporte la surépaisseur de l'empiècement 11 et comporte des portions 22, 23 correspondant aux talons 13, 14.

Le premier élément 18 et le deuxième élément 19 sont soudés l'un à l'autre avec la machine qui sera utilisée pour le soudage de l'empiècement 11 à l'aube 2, avec les paramètres pré-établis pour ce soudage. L'établissement préalable des paramètres peut être obtenu de la manière que nous décrirons ci-dessous. Le même dispositif de maintien est utilisé. Ainsi est effectué, avant le soudage de l'empiècement 11 à l'aube 2, un procédé tout fait similaire de soudage des deux éléments 18, 19, pour obtenir l'éprouvette de début de campagne.

Il est même possible, afin d'effectuer un soudage encore plus représentatif du soudage de l'empiècement 11 à l'aube 2, de prévoir des moyens simulant l'environnement massique et volumique de l'aube 2. En effet, en raison de la masse environnant l'aube 2, notamment de la présence, à sa proximité, du moyeu supportant la jante 3 de soutien des aubes 2, il se produit lors du soudage un effet de pompage thermique. La chaleur de soudage, amenée à un endroit localisé qui est le cordon de soudure, a tendance à diffuser dans la masse, sa diffusion variant en fonction de cette dernière. On tient compte lors du soudage de l'éprouvette de début de campagne de l'environnement de l'aube 2, qui peut par exemple être simulé grâce à l'outillage du dispositif de maintien, auquel on donne une masse plus importante que ce qui serait nécessaire.

Une fois les deux éléments 18, 19 de l'éprouvette de début de campagne soudés, on obtient donc l'éprouvette de début de campagne à proprement parler. On procède alors à un contrôle de la qualité de la soudure de l'éprouvette de début de campagne. En fonction des exigences, il est possible de ne procéder qu'à des contrôles visuels ou au binoculaire, ou de procéder à des coupes transversales et longitudinales au plan de joint afin d'effectuer des examens métallographiques.

Si ce ou ces contrôles révèlent un mauvais soudage, les paramètres sont adaptés et on procède éventuellement à un nouveau soudage d'une éprouvette de début de campagne, et ainsi de suite jusqu'à l'obtention d'une éprouvette de début de campagne considérée comme bonne, auquel cas les paramètres de la machine sont validés, car on considère qu'ils correspondent aux critères de réception de la réparation.

Une fois les paramètres de la machine validés, on peut procéder au soudage de l'empiècement 11 sur l'aube 2 pour la réparer, avec les mêmes paramètres. Le contrôle préalable d'une éprouvette de début de campagne est suffisant pour autoriser la réparation d'une pluralité d'aubes 2 identiques d'un même DAM, voire de plusieurs DAM identiques.

On peut noter que les paramètres de la machine de soudage par faisceau d'électrons étaient pré-établis. Toutefois, même si ces paramètres avaient été établis de façon à obtenir un bon soudage, l'éprouvette de début de campagne permet de s'assurer qu'il sont toujours bons, car il n'est pas exclu que l'usure, la chaleur, ... affectent quelque peu la précision de la machine.

Selon une caractéristique du procédé de l'invention, on procède, après la réparation de la ou des aubes 2 du ou des DAM, au soudage d'une éprouvette dite de fin de campagne. Une telle éprouvette est identique à l'éprouvette de début de campagne décrite ci-dessus, avec les deux mêmes éléments 18, 19. Le soudage est mis en oeuvre de façon tout à fait identique, avec les paramètres, validés par le contrôle de l'éprouvette de début de campagne, qui ont été utilisés pour la réparation des aubes 2. De la même façon, on procède à un ou des contrôles sur l'éprouvette de fin de campagne, ce qui permet de valider ou non la réparation de la ou des aubes 2 du ou des DAM. Ce contrôle de l'éprouvette de fin de campagne est de préférence précis, avec par exemple un examen métallographique, à la recherche de soufflures, qui sont des cavités formées par le gaz dégagé par le métal. Ces soufflures sont, dans le cas du titane Ti17, aussi petites que 5 à 100 µm et ne peuvent être détectées par simple radiographie. La densité de micro porosités observées lors de l'expertise métallographique sera déterminante pour l'acceptation de la réparation. Ainsi, le soudage d'une éprouvette de début de campagne et d'une éprouvette de fin de campagne et leur contrôle permet de valider l'ensemble de la campagne, c'est-à-dire la réparation du ou des DAM, car on considère que si le début et la fin sont corrects, alors l'ensemble de la ou des réparations est validé.

De préférence, les opérations effectuées sur l'aube 2 une fois qu'elle a été soudée (traitement thermique, grenaillage à ultrasons, ...) sont effectuées, si cela est possible, après le soudage et le contrôle de l'éprouvette de fin de campagne.

Selon une caractéristique de l'invention, les paramètres de la machine sont préétablis sur des éprouvettes dites de mise au point, identiques aux éprouvettes de début et de fin de campagne. Grâce à ces éprouvettes de mise au point, on détermine expérimentalement les paramètres de la machine de soudage pour la réparation d'une aube 2 d'un type particulier, présentant un profil déterminé. Cette mise au point des paramètres peut être effectuée lors de la réception d'une machine par le réparateur, ou encore préalablement par le fabricant du DAM, qui donnera alors au réparateur du DAM les paramètres à appliquer pour les aubes 2. L'intérêt de la ou des éprouvettes de début de campagne permet d'autant plus dans ce cas d'adapter les paramètres, qui peuvent subir de légères variations puisqu'ils ne sont pas mis en oeuvre sur la même machine.

Ainsi mis en oeuvre, le procédé de l'invention permet, non seulement la réparation d'un DAM en titane Ti17 qui n'était pas possible dans l'art antérieur, mais encore de standardiser de telles réparations. Ainsi, le constructeur fournit à ses réparateurs les paramètres à mettre en oeuvre pour la réparation des aubes 2, ces derniers effectuant le soudage et le contrôle d'une ou plusieurs éprouvettes de début de campagne pour valider ces paramètres, la réparation d'une ou plusieurs aubes avec un contrôle sommaire, voire pas de contrôle, puis la validation de cette réparation grâce au soudage et au contrôle d'une éprouvette de fin de campagne.

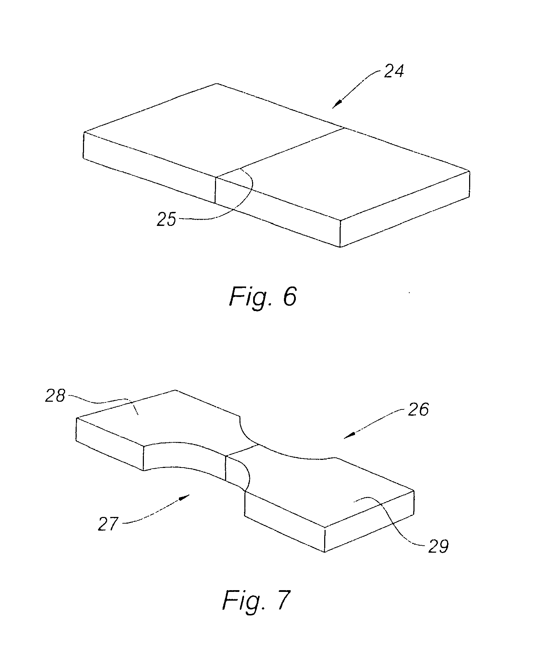

Selon une autre caractéristique de l'invention, on procède à la validation préalable d'une machine de soudage grâce à une éprouvette 24 dite de validation en tenue mécanique, représentée sur la figure 6. On procède à cet effet au soudage par faisceau d'électrons, avec des paramètres pré-établis, de deux plaques d'épaisseur correspondant au moins à l'épaisseur maximale l'aube 2, car c'est lors du soudage de celle-ci que le plus de défauts sont susceptibles d'être engendrés, afin d'obtenir l'éprouvette 24 de validation de tenue mécanique, avec la ligne de soudure 25 résultante.

On découpe alors une tranche 26 dans l'éprouvette 24 de validation de tenue mécanique, transversalement à la ligne de soudure 25, usinée de manière à former une barre 27 dans sa partie centrale, comportant la ligne de soudure 25 s'étendant transversalement à la barre 27. L'usinage est mis en oeuvre de façon à ménager, aux extrémités de la barre 27, des pattes 28, 29, plus larges, de préhension pour les mâchoires d'un appareil avec lequel on pratique des essais de fatigue cyclique. De tels essais mettent en oeuvre des tractions et compressions successives, à différentes températures, par exemple à température ambiante et aux températures de fonctionnement des aubes 2. L'éprouvette 24 peut aussi être utilisée pour effectuer divers contrôles, tels que ceux décrits plus haut, et par exemple être découpée transversalement et longitudinalement à des fins d'examens métallographiques.

Ainsi, l'éprouvette 24 de validation en tenue mécanique permet de valider un couple machine-matériau, et ainsi définir l'impact d'une réparation type sur le matériau et l'abattement de ses caractéristiques mécaniques.

Avantageusement, une telle validation en tenue mécanique est effectuée pour chaque machine, avant la mise en oeuvre du procédé de réparation et du soudage de l'éprouvette de début de campagne. La validation ne se fait donc pas tant pour un matériau mais pour chaque machine, en lien avec le matériau.

## Revendications

1. Procédé de réparation d'une aube (2) d'un disque aubagé monobloc (1) de turbomachine comportant au moins une zone endommagée, par soudage par faisceau d'électrons d'un empiècement (11) au moyen d'une machine de soudage par faisceau d'électrons, comprenant les étapes de préparation de la zone endommagée, de soudage par faisceau d'électrons de l'empiècement (11) et de reprise par usinage de la zone réparée, **caractérisé par le fait que** :
- l'étape de préparation comprend l'usinage de la zone endommagée de manière à obtenir une zone (10) à réparer de profil déterminé ;
- on procède au soudage, sur un premier élément d'éprouvette (18), correspondant à l'aube (2), présentant ledit profil déterminé (20), avec la machine de soudage, dont les paramètres de fonctionnement sont préétablis, d'un deuxième élément d'éprouvette (19), correspondant à l'empiècement (11), présentant les caractéristiques de l'empiècement (11), pour obtenir une éprouvette dite de début de campagne ;
- on vérifie la qualité de l'éprouvette de début de campagne après soudage, et, dans l'hypothèse où la qualité de l'éprouvette correspond aux critères de réception de la réparation,
- on soude l'empiècement (11) sur la zone à réparer (10) avec la même machine de soudage par faisceau d'électrons sans en changer les paramètres de fonctionnement et
- on reprend par usinage la zone réparée.

2. Procédé selon la revendication 1, dans lequel l'usinage de la zone endommagée se fait par découpe d'une portion standardisée (9) comprenant la zone endommagée, le long d'une ligne de découpe (10).

3. Procédé selon la revendication 2, dans lequel l'empiècement (11) comporte une ligne de découpe (12) présentant un profil correspondant au profil déterminé de la ligne de découpe (10) de l'aube (2), avec une surépaisseur.

4. Procédé selon la revendication 3, dans lequel la surépaisseur est sensiblement égale à 1 mm, répartis environ pour 0,5 mm de chaque côté de la ligne de découpe (10), pour une aube dont l'épaisseur varie entre 0,5 et 6 mm, de préférence entre 0,7 et 3,45 mm.

5. Procédé selon l'une des revendications 1 à 4, dans lequel, lors du soudage de l'empiècement (11), le faisceau d'électrons est légèrement décalé du côté de l'empiècement (11).

6. Procédé selon l'une des revendications 1 à 5, dans lequel il est prévu au moins un talon (13, 14) rapporté sur l'empiècement (11).

7. Procédé selon l'une des revendications 1 à 6 qui comprend, après le soudage de l'empiècement (11) sur l'aube (2), une étape de soudage, sur un premier élément d'éprouvette (18), correspondant à l'aube (2), présentant le profil déterminé de l'aube (2), d'un deuxième élément d'éprouvette (19), correspondant à l'empiècement (11), présentant les caractéristiques de l'empiècement (11), avec la même machine de soudage par faisceau d'électrons sans en changer les paramètres de fonctionnement, pour obtenir une éprouvette dite de fin de campagne, et de vérification de la qualité de l'éprouvette de fin de campagne.

8. Procédé selon l'une des revendications 1 à 7, qui comprend une étape de mise au point de la machine de soudage par faisceau d'électrons au cours de laquelle les paramètres sont préétablis par le soudage, sur un premier élément d'éprouvette (18), correspondant à l'aube (2), présentant le profil déterminé de l'aube (2), d'un deuxième élément d'éprouvette (19), correspondant à l'empiècement (11), présentant les caractéristiques de l'empiècement (11), pour obtenir une éprouvette dite de mise au point, suivi de contrôles non destructifs et/ou destructifs de l'éprouvette de mise au point.

9. Procédé selon les revendications 7 et 8, dans lequel les premiers éléments (18), ainsi que les deuxièmes éléments (19), de l'éprouvette de début de campagne, de l'éprouvette de fin de campagne et de l'éprouvette de mise au point, sont identiques.

10. Procédé selon les revendications 7 et 8, ou 9, dans lequel le soudage d'une éprouvette se fait avec des moyens de simulation de l'environnement massique de l'aube (2) pour simuler le pompage thermique.

11. Procédé selon l'une des revendications 1 à 10, qui comprend également une étape de validation du couple matériau-machine, au cours de laquelle on soude deux plaques du matériau de l'aube (2), d'épaisseur au moins égale à l'épaisseur maximale du profil déterminé de l'aube, pour obtenir une éprouvette (24) de validation en tenue mécanique, et on procède au moins à des essais de fatigue cycliques sur l'éprouvette (24) de validation en tenue mécanique.

12. Procédé selon l'une des revendications 1 à 11, appliqué à la réparation d'au moins une zone à réparer parmi les sommets de pale (8), les coins (6, 7) de bord d'attaque ou de bord de fuite, et les bords d'attaque (4) ou de fuite (5).

13. Procédé selon l'une des revendications 1 à 12, dans lequel l'aube (2) est constituée de titane dit Ti 17.

14. Procédé selon l'une des revendications 1 à 13, dans lequel la turbomachine est un turboréacteur.

15. Elément d'éprouvette de début de campagne, de fin de campagne ou de mise au point, pour la mise en oeuvre du procédé selon la revendication 9, présentant une ligne de découpe (20) dont le profil est identique au profil déterminé de l'aube (2), et constitué du même matériau.

16. Elément d'éprouvette de début de campagne, de fin de campagne ou de mise au point, pour la mise en oeuvre du procédé selon la revendication 9, présentant les caractéristiques de l'empiècement (11).

## Claims

1. Method of repairing a blade (2) of a one-piece bladed disc (1) of a turbomachine that includes at least one damaged region, by the electron-beam welding of a patch (11) by means of an electron-beam welding machine, comprising the steps of preparing the damaged region, of electron-beam welding the patch (11) and reworking of the repaired region by machining, **characterized in that**:
- the preparation step comprises the machining of the damaged region so as to obtain a region (10) to be repaired of defined profile;
- the welding is carried out, on a first test piece element (18), corresponding to the blade (2), having said defined profile (20), with the welding machine, the operating parameters of which are preset, and of a second test piece element (19), corresponding to the patch (11), having the characteristics of the patch (11), in order to obtain what is called a "start-of run" test piece;
- the quality of the start-of-run test piece after welding is checked and, if the quality of the test piece corresponds to the repair acceptance criteria,
- the patch (11) is welded on to the region (10) to be repaired with the same electron-beam welding machine without changing the operating parameters thereof; and
- the repaired region is reworked by machining.

2. Method according to Claim 1, in which the machining of the damaged region is carried out by cutting out a standardized portion (9) that includes the damaged region, along a cutting line (10).

3. Method according to Claim 2, in which the patch (11) includes a cutting line (12) having a profile corresponding to the defined profile of the cutting line (10) of the blade (2), with a thickness oversize.

4. Method according to Claim 3, in which the thickness oversize is approximately 1 mm, divided by about 0.5 mm on each side of the cutting line (10), for a blade whose thickness varies between 0.5 and 6 mm, preferably between 0.7 and 3.45 mm.

5. Method according to one of Claims 1 to 4, in which, while the patch (11) is being welded, the electron beam is slightly offset on the side with the patch (11).

6. Method according to one of Claims 1 to 5, in which at least one heel (13, 14) attached to the patch (11) is provided.

7. Method according to one of Claims 1 to 6, which includes, after the patch (11) has been welded on to the blade (2), a step of welding, on to a first test piece element (18), corresponding to the blade (2), having the defined profile of the blade (2), a second test piece element (19), corresponding to the patch (11), having the characteristics of the patch (11), with the same electron-beam welding machine without changing the operating parameters thereof, in order to obtain what is called an "end-of-run" test piece, and a step of checking the quality of the end-of-run test piece.

8. Method according to one of Claims 1 to 7, which includes a step of developing the electron-beam welding machine, during which the parameters are preset by the welding, on to a first test piece element (18), corresponding to the blade (2), having the defined profile of the blade (2) of a second test piece element (19), corresponding to the patch (11), having the characteristics of the patch (11), in order to obtain what is called a "development test piece" followed by non-destructive and/or destructive testing of the development test piece.

9. Method according to either of Claims 7 and 8, in which the first elements (18), and the second elements (19) of the start-of-run test piece of the end-of-run test piece and the development test piece are identical.

10. Method according to Claims 7 and 8, or 9, in which the welding of a test piece is performed with means for simulating the mass environment of the blade (2) in order to simulate the thermal pumping.

11. Method according to one of Claims 1 to 10, which also includes a step of validating the material/machine pair, during which two plates of the material of the blade (2), with a thickness at least equal to the maximum thickness of the defined profile of the blade, are welded in order to obtain a test piece (24) for validating the mechanical integrity, and at least cyclic fatigue tests are carried out on the test piece (24) for validating the mechanical integrity.

12. Method according to one of Claims 1 to 11, applied to the repair of at least one region to be repaired among the blade tips (8), the leading edge or trailing edge corners (6, 7), the leading edges (4) or the trailing edges (5).

13. Method according to one of Claims 1 to 12, in which the blade (2) is made of titanium called Ti17.

14. Method according to one of Claims 1 to 13, in which the turbomachine is a turbojet.

15. Start-of-run, end-of-run or development test piece element for implementing the method according to Claim 9, having a cutting line (20), whose profile is identical to the defined profile of the blade (2) and made of the same material.

16. Start-of-run, end-of-run or development test piece element for implementing the method according to Claim 9, having the characteristics of the patch (11).

## Patentansprüche

1. Verfahren zum Reparieren einer Schaufel (2) einer einstückigen, beschaufelten Turbomaschinen-Laufscheibe mit mindestens einem beschädigten Bereich durch Elektronenstrahl-Einschweißen eines Passstücks (11) mittels einer Elektronenstrahl-Schweißmaschine, welches die Verfahrensschritte der Vorbereitung des beschädigten Bereichs, des Elektronenstrahl-Einschweißens des Passstücks (11) und der Wiederherstellung des ursprünglichen Zustands durch Bearbeitung des reparierten Bereichs umfasst,
**dadurch gekennzeichnet,**
**dass** der Verfahrensschritt der Vorbereitung die Bearbeitung des beschädigten Bereichs dergestalt, dass ein zu reparierender Bereich (10) mit einem bestimmten Profil erzielt wird, umfasst,
**dass** auf ein erstes Probestück (18), das der Schaufel (2) entspricht und das genannte bestimmte Profil (20) aufweist, mit der Schweißmaschine, deren Betriebsparameter voreingestellt sind, ein zweites Probestück-Element (19), das dem Passstück (11) entspricht und die Merkmale des Passstücks (11) aufweist, geschweißt wird, um ein sogenanntes Schweißreihenanfangs-Probestück zu erhalten,
**dass** die Qualität des Schweißreihenanfangs-Probestücks nach dem Schweißen überprüft wird, und, angenommen, die Qualität des Schweißreihenanfangs-Probestücks entspricht den Abnahmekriterien für die Reparatur,
**dass** das Passstück (11) auf den zu reparierenden Bereich (10) geschweißt wird, und zwar mit der gleichen Elektronenstrahl-Schweißmaschine, ohne deren Betriebsparameter zu ändern, und
**dass** der reparierte Bereich durch Bearbeitung wieder in seinen ursprünglichen Zustand gebracht wird.

2. Verfahren nach Anspruch 1, bei dem die Bearbeitung des beschädigten Bereichs durch Abschneiden eines standardisierten Abschnitts (9), welcher den beschädigten Bereich umfasst, entlang einer Abschnittlinie (10) erfolgt.

3. Verfahren nach Anspruch 2, wobei das Passstück (11) eine Abschnittlinie (12) enthält, die ein Profil aufweist, das dem bestimmten Profil der Abschnittlinie (10) der Schaufel (2) entspricht, dabei eine Überdicke aufweist.

4. Verfahren nach Anspruch 3, wobei bei einer Schaufel, deren Dicke zwischen 0,5 und 6 mm und vorzugsweise zwischen 0,7 und 3,45 mm variiert, diese Überdicke im Wesentlichen 1 mm beträgt, die mit ungefähr 0,5 mm auf beide Seiten der Abschnittlinie (10) verteilt sind.

5. Verfahren nach einem der Ansprüche 1 bis 4, bei dem der Elektronenstrahl beim Einschweißen des Passstücks (11) leicht zur Seite des Passstücks (11) verschoben wird.

6. Verfahren nach einem der Ansprüche 1 bis 5, bei dem mindestens ein Ansatzstück (13, 14) an dem Passstück (11) angebracht wird.

7. Verfahren nach einem der Ansprüche 1 bis 6, das nach dem Einschweißen des Passstücks (11) an der Schaufel (2) einen Verfahrensschritt umfasst, bei dem mit der Elektronenstrahl-Schweißmaschine ohne Änderung der Betriebsparameter an einem ersten Probestück (18), das der Schaufel (2) entspricht und das bestimmte Profil der Schaufel (2) aufweist, ein zweites Probestück-Element (19), das dem Passstück (11) entspricht und die Merkmale des Passstücks (11) aufweist, eingeschweißt wird, um ein sogenanntes Schweißreihenende-Probestück zu erhalten, sowie einen Schritt der Überprüfung der Qualität des Schweißreihenende-Probestücks.

8. Verfahren nach einem der Ansprüche 1 bis 6, das einen Verfahrensschritt des Einstellens der Elektronenstrahl-Schweißmaschine umfasst, bei dem die Parameter voreingestellt werden, indem an einem ersten Probestück (18), das der Schaufel (2) entspricht und das bestimmte Profil der Schaufel (2) aufweist, ein zweites Probestück-Element (19), das dem Passstück (11) entspricht und die Merkmale des Passstücks (11) aufweist, eingeschweißt wird, um ein sogenanntes Einstellungs-Probestück zu erhalten, gefolgt von zerstörungsfreien und/oder zerstörenden Prüfungen des Einstellungs-Probestücks.

9. Verfahren nach den Ansprüchen 7 und 8, bei dem die ersten Elemente (18) sowie die zweiten Elemente (19) des Schweißreihenanfangs-Probestücks, des Schweißreihenende-Probestücks und des Einstellungs-Probestücks identisch sind.

10. Verfahren nach den Ansprüchen 7 und 8, oder 9, bei dem das Einschweißen eines Probestücks mit Mitteln zur Simulation der Masseumgebung der Schaufel (2) erfolgt, um das thermische Pumpen zu simulieren.

11. Verfahren nach einem der Ansprüche 1 bis 10, das auch einen Verfahrensschritt der Freigabe des Material-Maschinen-Paars umfasst, bei dem zwei Platten des Materials der Schaufel (2) mit einer Stärke von mindestens gleich der maximalen Stärke des bestimmten Profils der Schaufel zusammengeschweißt werden, um ein Freigabe-Probestück (24) hinsichtlich der mechanischen Festigkeit zu erhalten, und mindestens zyklische Ermüdungsversuche an dem Freigabe-Probestück (24) vorgenommen werden.

12. Verfahren nach einem der Ansprüche 1 bis 11, das bei der Reparatur von mindestens einem zu reparierenden Bereich an den Schaufelblattspitzen (8), den Ecken (6, 7) der Vorderkante oder Hinterkante und an den Vorderkanten (4) oder Hinterkanten (5) angewendet wird.

13. Verfahren nach einem der Ansprüche 1 bis 12, bei dem die Schaufel (2) aus Titan, dem sogenannten Ti17, gebildet ist.

14. Verfahren nach einem der Ansprüche 1 bis 13, bei dem die Turbomaschine ein Turboluftstrahltriebwerk ist.

15. Schweißreihenanfangs-Probestück, Schweißreihenende-Probestück oder Einstellungs-Probestück für die Durchführung des Verfahrens nach Anspruch 9, welches eine Abschnittlinie (20) mit einem Profil aufweist, das identisch mit dem bestimmten Profil der Schaufel (2) ist, und aus dem gleichen Material gebildet ist.

16. Schweißreihenanfangs-Probestück, Schweißreihenende-Probestück oder Einstellungs-Probestück für die Durchführung des Verfahrens nach Anspruch 9, welches die Merkmale des Passstücks (11) aufweist.
